(19) Europäisches Patentamt / European Patent Office / Office européen des brevets

(11) **EP 4 497 322 A1**

(12) **EUROPEAN PATENT APPLICATION**
published in accordance with Art. 153(4) EPC

(43) Date of publication:
**29.01.2025 Bulletin 2025/05**

(21) Application number: **23774952.8**

(22) Date of filing: **22.03.2023**

(51) International Patent Classification (IPC):
***A01G 7/00*** *(2006.01)*

(52) Cooperative Patent Classification (CPC):
**A01G 7/00**

(86) International application number:
**PCT/JP2023/011240**

(87) International publication number:
**WO 2023/182357 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.03.2022 JP 2022045376**

(71) Applicants:
  • **Shikoku Research Institute Incorporated
    Takamatsu-shi, Kagawa 761-0192 (JP)**
  • **Shikoku Electric Power Company, Incorporated
    Takamatsu-shi, Kagawa 760-8573 (JP)**

(72) Inventors:
  • **HADA, Ayako
    Takamatsu-shi, Kagawa 761-0192 (JP)**
  • **KAKIBUCHI, Kazumasa
    Takamatsu-shi, Kagawa 761-0192 (JP)**
  • **ISHIDA, Yutaka
    Takamatsu-shi, Kagawa 761-0192 (JP)**

(74) Representative: **Dehns
    10 Old Bailey
    London EC4M 7NG (GB)**

(54) **DISEASE CONTROL METHOD**

(57)    Provided is a novel method for controlling plant disease, with which light energy is efficiently utilized and the size of an irradiation device can be further reduced. A disease control method according to an aspect of the present invention includes irradiating a shoot apex part of a plant with near-infrared light. An irradiation area may be, for example, a vicinity of the shoot apex part including the shoot apex part.

FIG.5A

Vertical shoot positioning

Light source
P1
Approx. 1.5 m
Lower leaf

FIG.5B

Trellis training
Total length  Approx. 4m
Approx. 2 m
Light source
P1
Middle leaf

EP 4 497 322 A1

**Description**

Technical Field

The present invention relates to a method for controlling plant disease.

Background Art

In a process of cultivating plants, it is known that, in order to control a disease, the plants are irradiated with near-infrared light (Patent Document 1). However, this method requires continuous irradiation all day long, and thus requires a large irradiation device equipped with multiple light sources to irradiate the entire cultivation area, resulting in problems with cost. In view of this, attempts have been made to reduce costs by efficiently utilizing light energy by optimizing near-infrared light irradiation conditions.

Citation List

Patent Document

Patent Document 1: Japanese Patent No. 6061124

Summary of the Invention

Technical Problem

However, near-infrared light irradiation is performed on the presumption that the entire plant is irradiated with near-infrared light. Thus, an increase in the size of an irradiation device is still an issue.
In view of this, an object of the present invention is to provide a novel method for controlling a plant disease, with which light energy is more efficiently utilized and the size of an irradiation device can be further reduced.

Solution to the Problem

In order to achieve the aforementioned object, a disease control method according to an aspect of the present invention includes irradiating a shoot apex part of a plant with near-infrared light.

Advantageous Effects of Invention

According to the present invention, it is possible to effectively control a disease in a plant during cultivation by irradiating the shoot apex part of the plant even when, for example, the entire plant is not irradiated with near-infrared light. Thus, according to the present invention, for example, it is possible to reduce the size of an irradiation device used for near-infrared light irradiation and to further reduce light energy consumed, thus realizing cost reduction and labor saving in irradiation.

Brief Description of Drawings

[FIG. 1] FIG. 1A and FIG. 1B are diagrams showing an overview of a method for growing a plant, FIG. 1A showing vertical shoot positioning, and FIG. 1B showing trellis training.
[FIG. 2] FIG. 2 is a photograph of a handheld irradiation device used in the examples.
[FIG. 3] FIGs. 3A to 3C are diagrams showing an overview of positions at which cherry tomato plants are irradiated with near-infrared light in Example 1.
[FIG. 4] FIGs. 4A to 4C show photographs of leaves of the lowest branches of the cherry tomato plants in Example 1, FIG. 4A showing the result of a control plot that is not irradiated with near-infrared light, FIG. 4B showing the result of a test plot in which the vicinity of a shoot apex part was irradiated with near-infrared light, and FIG. 4C showing the result of a reference plot in which the entire plant was irradiated with near-infrared light.
[FIG. 5] FIG. 5A and FIG. 5B are diagrams showing an overview of parts of leaves collected from grapevines in Example 2(1), FIG. 5A showing vertical shoot positioning, and FIG. 5B showing trellis training.
[FIG. 6] FIG. 6A and FIG. 6B are graphs used to check an increase in gene expression in leaves of a plurality of parts collected from a grapevine in which a vicinity of the shoot apex part was irradiated with near-infrared light in Example 2(1), FIG. 6A showing vertical shoot positioning, and FIG. 6B showing trellis training.

[FIG. 7] FIG. 7 is a graph showing a relationship between irradiance and irradiation time of near-infrared light.

[FIG. 8] FIG. 8 is a diagram showing an overview of parts of a grapevine irradiated with near-infrared light and observation parts of the grapevine in Example 2(2).

[FIG. 9] FIG. 9 is a schematic diagram showing a vicinity of the shoot apex part of a strawberry seedling.

[FIG. 10] FIG. 10 is a schematic diagram showing a vicinity of a growing point of a shishito pepper seedling.

Description of Embodiments

The present invention includes aspects below.

[1] A disease control method includes irradiating a shoot apex part of a plant with near-infrared light.

[2] The disease control method according to [1], in which an irradiation area of the near-infrared light is a vicinity of the shoot apex part including the shoot apex part.

[3] The disease control method according to [2], in which the vicinity of the shoot apex part is in an area based on a tip of a stem, the area having a length that is 1/3 or less of a total length from the tip to a position of a branch at another end of the stem in a stem growth direction.

[4] The disease control method according to any one of [1] to [3], in which conditions under which the shoot apex part or the vicinity of the shoot apex part is irradiated satisfy Formula 1, Formula 2, and Formula 3,

$$\text{Formula 1: } 644893\text{X}^{-1.873} \geq \text{Y} \geq 5901.9\text{X}^{-1.856}$$

$$\text{Formula 2: } \text{X} \geq 1$$

$$\text{Formula 3: } \text{Y} \geq 0.01$$

where in each of the formulae, X is irradiance ($W/m^2$), and Y is irradiation time (sec).

[5] The disease control method according any one of [1] to [4], in which the near-infrared light includes a wavelength set within a wavelength range from 800 to 1000 nm.

[6] The disease control method according to any one of [1] to [5], in which a frequency of irradiation of the shoot apex part or the vicinity of the shoot apex part is from once a day to once a month.

[7] The disease control method according to any one of [1] to [6], in which a plant disease is a disease caused by a fungus.

[8] The disease control method according to [7], in which the fungus is at least one fungus selected from the group consisting of Ascomycota, Basidiomycota, flagellated fungi, Oomycota, and fungi imperfecti.

[9] The disease control method according to any one of [1] to [8], in which the plant disease is at least one disease selected from the group consisting of powdery mildew, gray mold, leaf mold, anthracnose, and downy mildew.

[10] The disease control method according to any one of [1] to [9], in which the plant is at least one plant selected from the group consisting of a strawberry plant, a tomato plant, a cherry tomato plant, a shishito pepper plant, a green bell pepper plant, a bell pepper plant, an eggplant plant, a cucumber plant, a pumpkin plant, a melon plant, a watermelon plant, an okra plant, a cabbage plant, a broccoli plant, a cauliflower plant, a napa cabbage plant, a komatsuna plant, a nabana plant, a leek plant, an onion plant, an asparagus plant, a grape plant, a citrus fruit plant, a peach plant, a pear plant, a persimmon plant, a cherry plant, a chrysanthemum plant, a rose plant, a carnation plant, and a lisianthus plant.

Hereinafter, an embodiment of the present invention will be described. Note that the present invention is not limited to the embodiment below.

As described above, a disease control method according to an aspect of the present invention is characterized by irradiating a shoot apex part of a plant with near-infrared light, and other processes, other conditions, and the like are not particularly limited.

In the present invention, disease control may mean, for example, prevention or elimination of a disease, and may mean any one or both of prevention and elimination of a disease. Also, specific examples of disease control include suppression (prevention) of the development of a disease and suppression of the progress of a disease, and disease control can also be referred to as disease suppression.

In this specification, a "part to be irradiated with near-infrared light" means, for example, a plant region that is hit by near-infrared light, and hereinafter, is also referred to as an irradiated part or irradiated region. Also, in this specification, a "near-infrared light irradiation target part" means, for example, an irradiation target part set for an irradiation object plant when the plant is irradiated with near-infrared light, and is also referred to as an irradiation target region. That is, in this specification, the irradiation target part is, for example, a part set by an irradiation device or a part set by an operator of the irradiation device.

In the present invention, the irradiated part in a plant may be, for example, only a shoot apex part or a vicinity of a shoot apex part including the shoot apex part. In this specification, the vicinity of the shoot apex part is a region including both the shoot apex part and a surrounding portion of the shoot apex part, unless otherwise specified.

In the present invention, for example, it is preferable to set, as the near-infrared light irradiation target part, either the shoot apex part or the vicinity of the shoot apex part including the shoot apex part. In the present invention, for example, when the shoot apex part or the vicinity of the shoot apex part is set as the irradiation target part, irradiation of the irradiation target part does not exclude the possibility that a surrounding region of the irradiation target part will be irradiated as a result.

In the present invention, with respect to the near-infrared light irradiation, the shoot apex part may be specifically set as the irradiation target part. In this case, for example, the shoot apex part in the vicinity of the shoot apex part is set as an irradiation point (also referred to as a "focal point"). Also, in the present invention, a wider region, i.e., the vicinity of the shoot apex part may be set as the irradiation target part in the near-infrared light irradiation. In this case, for example, the shoot apex part in the vicinity of the shoot apex part may be set as an irradiation point (also referred to as a "focal point"). Further, because it is sufficient that at least the shoot apex part is irradiated with near-infrared light in the present invention, for example, when the vicinity of the shoot apex part is set as the irradiation target part, the irradiation point may be set in a region other than the shoot apex part in the vicinity of the shoot apex part, within a range in which the shoot apex part is ultimately irradiated with near-infrared light.

In the present invention, for example, it is preferable to irradiate the irradiation target part (the shoot apex part or the vicinity of the shoot apex part) such that, when a later-described irradiation condition is set, the set irradiation condition is satisfied. Specifically, it is preferable to set, as the near-infrared light irradiation target part, the shoot apex part or the vicinity of the shoot apex part, and to irradiate the irradiation target part under the set irradiation condition. In the present invention, the irradiation of a surrounding region of the irradiation target part is not excluded as described above, but, for example, the surrounding region other than the irradiation target part does not need to satisfy the set irradiation condition. Therefore, according to the present invention, for example, it is not necessary to use a large irradiation device capable of irradiating the entire plant in one instance of irradiation, perform irradiation while moving an irradiation device from the lowermost part to the uppermost part of the plant, or the like, in order to irradiate the entire plant in a manner that the set irradiation condition is satisfied.

In plants, a shoot apex part is a so-called tip of the stem (main stem), and for example, also refers to a growing point. In the present invention, the vicinity of the shoot apex part including the shoot apex part does not refer to the entire plant including the shoot apex part, but refers to, for example, a region on the tip side of the stem in the stem growth direction.

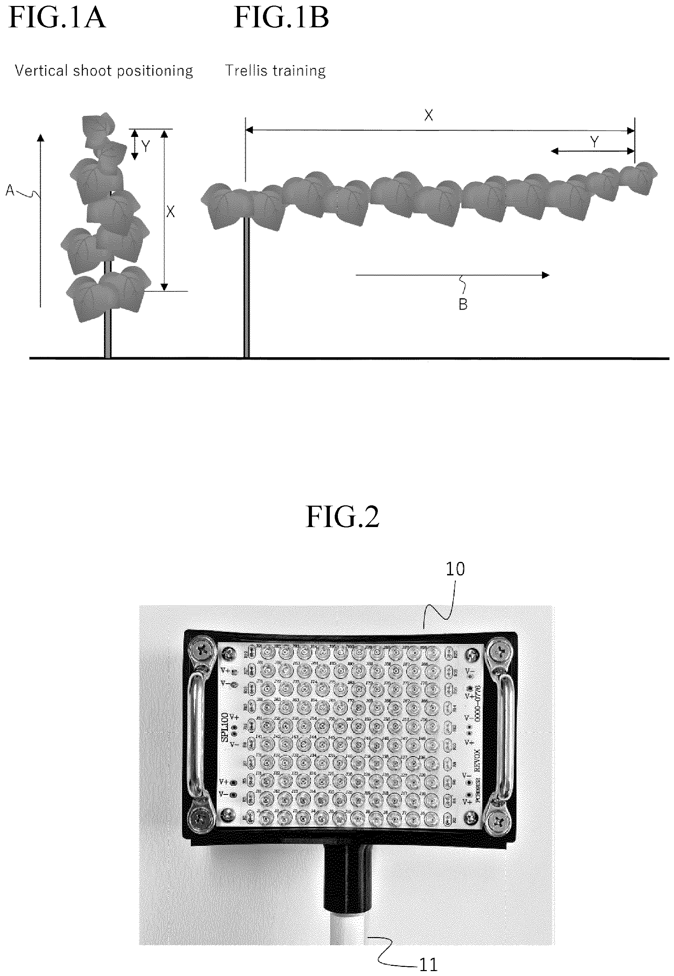

The vicinity of the shoot apex part can also be defined by, for example, the ratio of the length of the vicinity thereof based on the tip of the stem to the length of the stem in the stem growth direction (e.g., the entire stem length). The stem growth direction can be determined as appropriate depending on, for example, a growth method. The stem growth direction may be, for example, the height in a vertical direction relative to the ground, the length in a horizontal direction relative to the ground, or may include both directions. As shown in FIGs. 1A and 1B, specific examples of a method for growing a plant include FIG. 1A vertical shoot positioning and FIG. 1B trellis training.

In the case of the vertical shoot positioning shown in FIG. 1A, a support is set up vertically to the ground, and a wire or the like is stretched parallel to the ground on the support, thus creating a hedge. The plant stem grows upward from the ground along the support extending in the vertical direction. In this case, in the present invention, the direction of the plant stem growth is, for example, a vertical direction (direction A) to the ground. The length of a stem in the growth direction is not, for example, the length of the stem artificially pulled and stretched in the vertical direction, but the length of the stem in the vertical direction in its natural state during growth. As a specific example, the length of a stem can be defined as a length (X) from the tip (e.g., the shoot apex part) of the stem to the position of a leaf on a branch at the other end of the stem in the stem growth direction (direction A). A branch at the other end of the stem is, for example, the most distant branch opposite to the tip of the stem in the growth direction, and is, for example, the branch closest to the root (also referred to as the lowest branch for convenience) in FIG. 1A. Also, the vicinity of the shoot apex part of a plant is, for example, a region based on the tip in FIG. 1A, and the length of the vicinity of the shoot apex part in the stem growth direction (direction A) is a distance (Y) based on the tip, i.e., the distance from the tip. When the length (X) of the stem in the growth direction takes a relative value of 1, the ratio of the distance (Y) of the vicinity of the shoot apex part is, for example, 1/3 or less, 1/5 or less, 1/10 or less, 1/50 or less, 1/100 or less, 1/200 or less, 1/400 or less, 1/1000 or less, 1/1500 or less, and 1/2000 or less. The length (X) of the stem in the growth direction can be set to, for example, the length from the tip of the stem (e.g., the shoot apex part) to the position of the branch at the other end of the stem, and is also referred to as the total length of the stem hereinafter.

In the case of the trellis training shown in FIG. 1B, straight supports having a desired height are set up vertically to the ground, and a trellis parallel to the ground is installed at the desired height. The stem of the plant grows to the desired height along the supports extending in the vertical direction, and then creeps up the trellis and extends in a direction parallel to the ground. In this case, in the present invention, the direction of the plant stem growth is, for example, in a horizontal direction (direction B) to the ground. The length of a stem in the growth direction is not, for example, the length of the stem artificially pulled and stretched in the parallel direction, but the length of the stem in the parallel direction in its natural state during growth. As a specific example, the length of a stem can be defined as a length (X) from the tip (e.g., the shoot apex part) of the stem to the position of a leaf on a branch at the other end of the stem in the stem growth direction (direction B). A branch at the other end of the stem is, for example, the most distant branch opposite to the tip of the stem in the growth direction, i.e., the branch closest to the supports (also referred to as the lowest branch for convenience, as in FIG. 1A). Also, the vicinity of the shoot apex part of a plant is, for example, a region based on the tip in FIG. 1B, and the length of the vicinity of the shoot apex part in the stem growth direction (direction B) is a distance (Y) based on the tip, i.e., the distance from the tip. When the length (X) of the stem in the growth direction takes a relative value of 1, the ratio of the distance (Y) of the vicinity of the shoot apex part is, for example, 1/3 or less, 1/5 or less, 1/10 or less, 1/50 or less, 1/100 or less, 1/200 or less, 1/400 or less, 1/1000 or less, 1/1500 or less, and 1/2000 or less. The length (X) of the stem in the growth direction can be set to, for example, the length from the tip of the stem (e.g., the shoot apex part) to the position of the branch at the other end of the stem, and is also referred to as the total length of the stem hereinafter.

When an irradiation object is a plant that produces a plurality of flower trusses successively as it grows, irradiation of the shoot apex part or the vicinity of the shoot apex part can be set, for example, as follows. That is, in the plant, based on the flower truss closest to the shoot apex part, a region located on the shoot apex part side may be irradiated as the vicinity of the shoot apex part, or the vicinity of the shoot apex part may be irradiated by setting the region to the irradiation target part. The region need only include the shoot apex part, and for example, may or need not include the flower truss closest to the shoot apex part.

In the present invention, for example, the same individual plant is irradiated with near-infrared light once, twice, or more times during a cultivation period of the plant, and is preferably irradiated with near-infrared light twice or more times (multiple times) at any interval. In the present invention, a single instance of irradiation is irradiation that reaches any preset integrated light quantity, and the integrated light quantity may be achieved through continuous irradiation or intermittent irradiation. In the present invention, the interval between a given instance of irradiation and the next instance of irradiation, i.e., the irradiation interval, is not particularly limited, and is, for example, one day, two days or more, and a specific example will be described later.

Intermittent irradiation is irradiation that repeatedly blinks at short time intervals, and is also referred to as pulse irradiation in which multiple sets of pulse ON (irradiation) and pulse OFF (irradiation) are repeated. The pulse ON width (pulse width) and the pulse OFF width are, for example, in units of tens of seconds (e.g., less than 1 minute, 30 seconds or less, 10 seconds or less, 5 seconds or less, or 1 second or less), milliseconds, or microseconds. In the present invention, for example, when one instance of irradiation is performed through intermittent irradiation, the entire repetition of the above-mentioned multiple sets is referred to as one instance of intermittent irradiation.

In the present invention, the area of an irradiation object irradiated through one instance of near-infrared light irradiation is not particularly limited, and is, for example, 5 to 20 mm$^2$, 4900 to 10000 mm$^2$, or the like, and is, for example, 5 to 100 mm in length × 5 to 100 mm in width. In order to irradiate the range of the above-mentioned area with near-infrared light, it is possible to use, for example, an irradiation device having a light source whose effective irradiation area is the above-mentioned area. Also, in the present invention, in a region including the shoot apex part of an irradiation object plant, the above-mentioned area range is preferably irradiated with near-infrared light that satisfies, for example, Formulae 1, 2, and 3, which will be described later.

There is no particular limitation on the near-infrared light, and the wavelength of the near-infrared light is, for example, in a range (region) of 800 to 1000 nm. Near-infrared light with which a plant is irradiated may include all light within the above-mentioned wavelength range or may include part of light within the wavelength range. In near-infrared light irradiation, for example, any wavelength can be set within the above-mentioned wavelength range. Specifically, the central wavelength or peak wavelength of near-infrared light used for irradiation is preferably within a wavelength range, for example, from 800 to 1000 nm. The near-infrared light may be, for example, single-wavelength light such as a laser beam, or may be light having a wavelength distribution, such as that from a fluorescent lamp or an LED. Also, the near-infrared light may, for example, have one peak wavelength or a wavelength having two or more different peaks, and the center wavelength of the near-infrared light used for irradiation is preferably present in the wavelength range from 800 to 1000 nm as described above.

In the present invention, "near-infrared light irradiation" means, for example, artificial irradiation, not non-artificial irradiation. Non-artificial irradiation means that, for example, by simply placing a plant in an environment where the plant receives natural light such as sunlight, the plant non-artificially receives natural light including near-infrared light. On the other hand, artificial irradiation means that, for example, the wavelength of light is adjusted and a plant is artificially irradiated with near-infrared light, or a plant is irradiated with separated near-infrared light. For example, an irradiation device that emits near-infrared light can be used to adjust the wavelength of light. Examples of the irradiation device include a light irradiation device having a light source and a light adjustment device that extracts a target light. The light adjustment device may, for example, extract target light from an external light source or natural light, or the device may further include a light source and extract target light from light emitted from the light source.

As described above, for example, an irradiation device having a light source or the like can be used to irradiate a plant with near-infrared light. According to the present invention, as described above, for example, there is no need to irradiate the entire plant and it is sufficient to set the shoot apex part or the vicinity of the shoot apex part as the irradiation target part. Thus, a small-sized irradiation device having a light source is sufficient instead of a large-sized irradiation device with which the entire plant is irradiated. As will be described later, the small-sized irradiation device may be, for example, a handheld device that can be easily carried by an operator, or an attachmenttype device that is detachable from a moving body such as a cart that can be moved in a field or a drone.

Examples of the light source that emits near-infrared light include light-emitting diodes (LEDs), fluorescent tubes, metal halide lamps, sodium lamps, halogen lamps, xenon lamps, neon tubes, inorganic electroluminescence, organic electroluminescence, chemiluminescence (chemical luminescence), and lasers. It is preferable to set the wavelength of the light source to the above-mentioned wavelength range and emit near-infrared light from the light source.

Also, for example, a spectroscopic device (spectroscopic member) that extracts target light may be used as the light adjustment device in near-infrared light irradiation. The spectroscopic device is, for example, a spectral filter that transmits only near-infrared light, and a spectral filter that transmits only a wavelength set within the above-mentioned wavelength range may be used as a specific example. When the spectral filter is used, for example, it is possible to use a light source that emits not only near-infrared light but also other light, or natural light such as sunlight. By causing light emitted from the light source or natural light to pass through the spectral filter, for example, it is possible to artificially adjust the wavelength of light (separate near-infrared light) and irradiate a plant with near-infrared light.

There is no particular limitation on irradiation conditions in the present invention, and examples thereof include the following conditions. In the present invention, it is preferable to set, to the following conditions, irradiation conditions for the shoot apex part or the vicinity of the shoot apex part, and in particular, to set irradiation conditions for at least the shoot apex part to the following conditions. Regarding irradiation conditions, for example, WO 2021/049640 and the like can be referenced. Also, in the present invention, for example, a relationship between irradiance and irradiation time of near-infrared light radiation, optimum irradiation conditions for disease control, and the like can be applied regardless of the type of plant. Note that the present invention is not limited to the following specific examples.

The irradiation conditions preferably satisfy, for example, Formula 1, Formula 2, and Formula 3, and specifically, the wavelength range and the formulae are satisfied.

$$\text{Formula 1: } 644893X^{-1.873} \geq Y \geq 5901.9X^{-1.856}$$

$$\text{Formula 2: } X \geq 1$$

$$\text{Formula 3: } Y \geq 0.01$$

where in each of the formulae, X is irradiance ($W/m^2$), and Y is irradiation time (sec).

The Formula 1, the Formula 2, and the Formula 3 are examples of the relationship between the irradiance X and the irradiation time Y of near-infrared light that effectively exerts a disease control effect in a plant. The Formula 1, the Formula 2, and the Formula 3 are preferably, for example, conditions relating to near-infrared light irradiation in the above wavelength range, in near-infrared light.

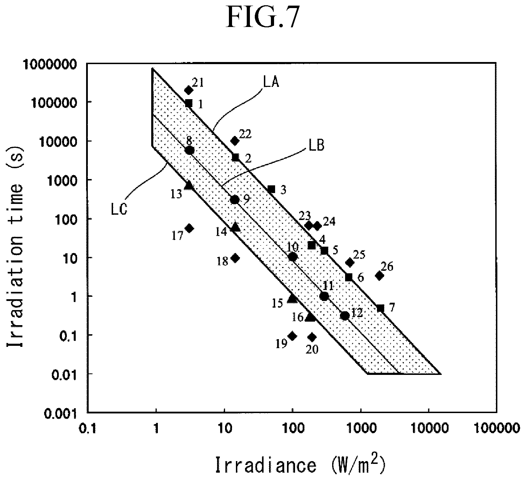

A regression equation "$Y = 644893X^{-1873}$" in the Formula 1 is represented by a regression line LAin the log-log graph shown in FIG. 7. Here, when coordinates indicated by the irradiance X and the irradiation time Y are present above the regression line LA, a plant is overexposed to near-infrared light. When the coordinates are present below the regression line LA, for example, the irradiance or irradiation time will meet a required amount, and a sufficient disease control effect can also be obtained. This allows further energy conservation of power required to generate near-infrared light, and further extends the lifespan of the light source.

Also, the regression equation "$Y = 5901.9X^{-1.856}$" in the Formula 1 is represented by a regression line LC in the log-log graph shown in FIG. 7. Here, when coordinates indicated by the irradiance X and the irradiation time Y are present below the regression line LC, a plant is underexposed to near-infrared light. When the coordinates are present above the regression line LC, for example, the irradiance or irradiation time will meet a required amount, and a sufficient disease control effect can also be obtained.

Also, a regression line LB shown in FIG. 7 represents a regression equation "$Y = 41491X^{-1.848}$". This regression line LB indicates, for example, a relationship between the irradiance and the irradiation time, which is most effective in controlling a plant disease.

Further, in irradiation of a plant with near-infrared light, for example, the relatively smaller the irradiance is, the relatively longer the irradiation time is, whereas the relatively shorter the irradiation time is set, the relatively larger the irradiance is set. Thus, for example, the irradiance is preferably 1 W/m$^2$ or more and the irradiation time is preferably 0.01 seconds or more in consideration of the irradiation time and the irradiance in terms of operation efficiency and energy conservation.

As described above, in the present invention, for example, it is particularly preferable to set the irradiance and the irradiation time such that coordinates are present within a range surrounded by four straight lines, namely, the regression line LA, the regression line LC, X = 1, and Y = 0.01 in FIG. 7. When the irradiation conditions are expressed using formulae, all of the Formulae 1, 2, and 3 are satisfied. By irradiating the shoot apex part of a plant or the vicinity of the shoot apex part with near-infrared light under such set conditions, for example, it is possible to obtain a more effective disease control effect as well as to further improve operation efficiency and energy conservation.

According to the Formulae 1, 2, and 3, the relationship between the irradiance and the irradiation time of near-infrared light is clear. Thus, in the present invention, by utilizing the Formulae 1, 2, and 3, for example, one or both of the irradiance and the irradiation time of near-infrared light can be more easily set as irradiation conditions under which a plant disease can be effectively controlled. That is, for example, when the distance increases between the near-infrared light source and the shoot apex part of an irradiation object plant, the irradiance at the shoot apex part decreases compared to a case where the distance is shorter, and the irradiation energy received by the shoot apex part decreases even in irradiation for the same period of time. In such a case, for example, based on the Formulae 1, 2, and 3, the irradiation time can be easily adjusted to be relatively long such that a sufficient disease control effect can be obtained even with low irradiance. Also, when the shoot apex part of each individual plant is irradiated with near-infrared light while moving a light source, for example, if the light source passes the vicinity of the individual plant for a short period of time, the irradiation energy received by the shoot apex part will be smaller than that when the light source passes the vicinity thereof for a long period of time. In such a case, based on the Formulae 1, 2, and 3, the irradiation time can be easily adjusted to be relatively long such that a sufficient disease control effect can be obtained even with a short irradiation time.

Specific examples of adjustment of the irradiation conditions using the above Formulae 1, 2, and 3 will be described below. Note that these examples are merely examples, and the present invention is not limited to these examples. For example, in an embodiment, the shoot apex part or the vicinity of the shoot apex part of a plant during cultivation is irradiated with near-infrared light containing a wavelength set within a wavelength range from 800 to 1000 nm where the irradiance (W/m$^2$) is X and the irradiation time (sec) is Y, the near-infrared light irradiation is performed by adjusting at least one of the irradiance and the irradiation time roughly based on a function that satisfies all of the above Formulae 1, 2, and 3 and is represented by "$Y = 41491X^{-1.848}$". As described above, the Formula "$Y = 41491X^{-1.848}$" is a regression equation (function) that represents the regression line LB shown in FIG. 7.

Also, in another embodiment, the shoot apex part or the vicinity of the shoot apex part of a plant during cultivation is irradiated with near-infrared light containing a wavelength set within a wavelength range from 800 to 1000 nm where the irradiance (W/m$^2$) is X and the irradiation time (sec) is Y, the near-infrared light irradiation is performed by adjusting at least one of the irradiance and the irradiation time roughly based on a function that satisfies all of the above Formulae 1, 2, and 3 and is represented by "$Y = 644893X^{-1.873}$". As described above, the Formula "$Y = 644893X^{-1.873}$" is a regression equation (function) that represents the regression line LA shown in FIG. 7.

Further, in another embodiment, the shoot apex part or the vicinity of the shoot apex part of a plant during cultivation is irradiated with near-infrared light containing a wavelength set within a wavelength range from 800 to 1000 nm where the irradiance (W/m$^2$) is X and the irradiation time (sec) is Y, the near-infrared light irradiation is performed by adjusting at least one of the irradiance and the irradiation time roughly based on a function that satisfies all of the above Formulae 1, 2, and 3 and is represented by "$Y = 5901.9X^{-1.856}$". As described above, the Formula "$Y = 5901.9X^{-1.856}$" is a regression equation (function) that represents the regression line LC shown in FIG. 7.

In the present invention, as described above, one instance of near-infrared light irradiation may be, for example, continuous irradiation or intermittent irradiation of one part. Continuous irradiation refers to, for example, continuous irradiation with near-infrared light for a predetermined period of time (e.g., 5 minutes). Intermittent irradiation is, for example, pulse irradiation in which a set of irradiation (ON) for a predetermined period of time and non-irradiation (OFF) for a predetermined period of time is repeated multiple times. In one instance of intermittent irradiation, for example, the ON time and OFF time in each set may be the same or different from each other. Continuous irradiation and intermittent irradiation can be made to be similar irradiations, for example, by making the total irradiation time of one instance of intermittent irradiation (e.g., ON time in one set × number of sets) the same as the continuous irradiation time of one instance of continuous irradiation. As a specific example, when one instance of continuous irradiation (5 minutes) is similar to one instance of intermittent irradiation, for example, one set may include an ON time of 10 seconds and an OFF time of 10 seconds, and 30 sets may be repeated such that the total ON time is 5 minutes. From the viewpoint of operation efficiency, with regard to the continuous irradiation time per continuous irradiation and the total irradiation time per intermittent irradiation, for example, it is preferable to set the upper limit to 5 minutes or less, 1 minute or less, 30 seconds or less, 10 seconds or less, 1 second or less, or the like, and to set the lower limit to 0.1 seconds or more, 0.5 seconds or more, 1 second or more, 3 seconds or more, 5 seconds or more, or the like, and to set the range thereof to 0.1 seconds to 5 minutes, 0.1 seconds to 1 minute, 0.1 seconds to 30 seconds, 0.1 seconds to 10 seconds, 0.5 seconds to 5 minutes, 0.5 seconds to 1 minute, 0.5 seconds to 30 seconds, 0.5 seconds to 10 seconds, 1 second to 5 minutes, 1 second to 1 minute, 1 second to 30 seconds, 1 second to 10 seconds, or the like. Also, in this case, it is further preferable to set the irradiance such that the relational formulae described above as examples are satisfied.

There is no particular limitation on the frequency of irradiation of the same individual plant with near-infrared light (also referred to as the above-described irradiation interval), and examples thereof include any period between 1 day and 1 month, any period between 1 day and 30 days, and any period between 1 day and 14 days. That is, specific examples of the frequency of irradiation include once a day to once a month, once a day to once every 30 days, and once a day to once every 14 days. When near-infrared light irradiation is periodically performed during the cultivation period of a plant, a period between instances of irradiation (non-irradiation period) may be, for example, a fixed number of days or a variable number of days. The disease control effect of near-infrared light irradiation can be particularly effective and lasts for, for example, about 14 days through one instance of irradiation. Thus, the frequency of near-infrared light irradiation is preferably, for example, once every 1 to 14 days.

According to the present invention, the disease control effect can also be continuously maintained by periodically repeating near-infrared light irradiation at, for example, the above-mentioned irradiation intervals, preferably at an irradiation interval (irradiation frequency) of 1 to 14 days, during the cultivation period of a plant. The number of times that the shoot apex part or the vicinity of the shoot apex part is irradiated at the irradiation interval during the cultivation period is not particularly limited.

In the present invention, when irradiating a plant with near-infrared light, a light environment of a surrounding region of the irradiation object plant may be, for example, dark or bright, and the plant can be artificially irradiated with near-infrared light using an irradiation device described above. When the irradiation object plant is in a dark state, for example, a light irradiation device having the light source may be used to irradiate the plant with near-infrared light, or the light adjustment device may be used to extract near-infrared light from light with a wide wavelength and to irradiate the plant with artificially adjusted near-infrared light. On the other hand, the latter bright state includes, for example, a state in which the irradiation object plant is under artificial lighting such as a fluorescent lamp or an LED, or under natural light such as sunlight. In this case, for example, the light irradiation device may be used to irradiate the plant with near-infrared light, or the light adjustment device may be used to extract near-infrared light from light of the lighting or natural light and to irradiate the plant with artificially adjusted near-infrared light. In the bright state, for example, it is preferable that the irradiance of light other than near-infrared light is weaker than the irradiance of near-infrared light with which a plant is artificially irradiated.

In the present invention, there is no particular limitation on a specific method for irradiating a plant with near-infrared light. When the plant is grown in, for example, a building such as a greenhouse or a hydroponic cultivation room, the shoot apex part or the vicinity of the shoot apex part of the plant may be irradiated with near-infrared light using an irradiation device installed on the ceiling or a wall of the building. When the plant is grown outdoors, for example, a mobile irradiation device provided with a near-infrared light source or the like can be used. The mobile irradiation device may be, for example, a mobile irradiation device in which a light source is installed on a cart that moves automatically or manually, a device in which a light source is installed on a drone, or a handheld device in which a light source is installed.

In the present invention, there is no particular limitation on the plant that is the irradiation object. The irradiation object includes, for example, all plants cultivated using an agricultural technique, and the disease control method according to the present invention can be widely applied to, for example, plants under cultivation. Specific plant examples thereof include fruits and vegetables (including eggplant, pepino, tomato, cherry tomato, tamarillo, hawkweed, chili pepper, shishito pepper, habanero, green bell pepper, bell pepper, colored pepper, pumpkin, zucchini, cucumber, horned melon, oriental pickling melon, bitter melon, wax gourd, chayote, luffa, bottle gourd, okra, strawberry, watermelon, melon, oriental melon, and the like; cereals such as corn; and beans such as adzuki beans, common beans, peas, edamame, cowpeas, winged beans, broad beans, soybeans, sword beans, peanuts, lentils, and sesame), leaf and stem vegetables (including leaf vegetables such as ice plant, ashitaba, mustard, cabbage, watercress, kale, komatsuna, baby leaf, red leaf lettuce, choy sum, Korean lettuce, Shantung cabbage, perilla, crown daisy, watershield, shirona, Japanese parsley, celery, tatsoi, daikon leaf (suzushiro), leaf mustard, lettuce, bok choy, tsukena, rapeseed, nozawana, napa cabbage, parsley, haruna, chard, spinach, common henbit, mizuna, greater chickweed, chickweed, water chickweed, mibuna, Japanese honeywort, Brussels sprout, nalta jute, leaf lettuce, arugula, head lettuce, and wasabina; stem vegetables such as leek, green onions, Japanese chives, Chinese chives, asparagus, Japanese spikenard, German turnip, zha cai, bamboo shoots, garlic, water spinach, leek, tree onion, and onion; flower vegetables such as artichoke, broccoli, cauliflower, edible chrysanthemum, rapeseed, Japanese butterbur buds, and myoga; and sprouted vegetables such as sprouts, bean sprouts, and daikon radish sprouts), root vegetables (including turnip, daikon, heart radish, wasabi, horseradish, burdock, Chinese artichoke, ginger, carrots, Chinese onion, lotus root, and lily root; and tubers and roots such as sweet potato, taro, potato, nagaimo (mountain yam), Japanese mountain yam (yamaimo and jinenyo), various citrus fruits such as mandarins, apples, peaches, pears, European pears, bananas, grapes, cherries, silverberries, brambles, blueberries, raspberries, blackberries, mulberries, loquat, fig, persimmon, chocolate vine, mango, avocado, jujube, pomegranate, passion fruit, pineapple, banana, papaya, apricot, Japanese plum, plum, peaches, kiwi fruit, Chinese quince, red bayberry, chestnut, miracle fruit, guava, star fruit, acerola, hollyhock, bouvardia, godetia, evening primrose, stock, snapdragon, lunaria, acidansera, iris, gladiolus, California poppy, peperomia, calceolaria, snapdragon, torenia, primrose, cyclamen, trailing iceplant, anthurium, calla, caladium, sweet flag, syngonium, spathiphyllum, dieffenbachia, philodendron, cacti, ajuga, obedient plant, salvia, begonia, curcuma, water lily, little hogweed, violet, white laceflower, purple-heart, oyster plant, bluejacket, rose balsam, nipplefruit, petunia, Chinese lantern plant, carnation, dianthus, China pink, annual baby's-breath, penicled baby's breath, Sweet William catchfly, Guzmania, Strelitzia, moss phlox, phlox, garden phlox, Kyo Kanoko, amarcrinum, amaryllis, florist's daisy, Paris daisy, clivia, cyrtanthus, daffodil, snowflake, white rain lily, nerine, poison bulb, sea angelica, eucharis, licorice, agave, plumed cockscomb, globe amaranth, Japanese morning-glory, Evolvulus, Cleome, geranium, Kalanchoe, Scabiosa, sweet pea, lupin, borage, forget-me-not, astilbe, creeping saxifrage, Agapanthus, Polygonatum, aloe, Ornithogalum, Nippon lily, spider plant, plantain lily, black lily, Gloriosa, Colchicum, Sansevieria, Sandersonia, Ophiopogon, tulip, Tulbaghia, lily of the valley, Dracaena, Triteleia, Polygonatum, Narcissus, New Zealand flax, Fritillaria, Hyacinthus, toad lily, daylily, big blue lily turf, lily, Alstroemeria, Ruscus, large-flowered cypripedium, calendula, Calanthe, Oncidium, Cattleya, Colmanara, Chinese ground orchid, Cymbidium, Coelogyne, Dendrobium, Doritaenopsis, nago-ran, Paphiopendilum, Vanda, Vuylstekeara, Phalaenopsis, Braunau, Miltonia, Exacum, Eustoma, Japanese gentian, Lantana, Rose, cherry blossom, Gerbera, and the like; and sakaki, sogo cycad, fern, dracaena, cast-iron plant, Monstera, pothos, Compacta, Polyscias, jungle bush, Lycium, bear grass, and pittosporum, which are used for appreciating leaves.

There is no particular limitation on plant diseases that can be controlled by the present invention, and examples thereof include plant diseases mainly caused by fungi. Examples of the pathogenic fungi include Ascomycota, Basidiomycota, flagellated fungi, Oomycota, and fungi imperfecti. Examples of Ascomycota include powdery mildew fungi, and specific examples thereof include strawberry powdery mildew fungus (Sphaerotheca aphanis) and tomato powdery mildew fungi (Oidium and Oidiopsis fungi). Examples of Oomycota include downy mildew fungi, and specific examples thereof include cucumber downy mildew fungus (Pseudoperonospora cubensis). Examples of fungi imperfecti include leaf mold fungi and gray mold fungi, and specific examples thereof include tomato leaf mold fungus (Fulvia fulva) and tomato gray mold fungus (Botrytis cinerea). Note that these examples are merely examples, and the present invention is not limited to these examples.

[Examples]

[Example 1]

A disease control effect was checked by irradiating only the vicinities of shoot apex parts of cherry tomato plants with near-infrared light.

The near-infrared light irradiation device of a handheld type was used and the device was provided with a light source unit 10 at a leading end of a rod 11 shown in the photograph of FIG. 2. The light source unit 10 was equipped with 10 × 10 LEDs in an area of 70 mm length × 70 mm width, and its effective irradiation area was 70 mm × 70 mm. Here, the effective irradiation area is an irradiation object region that receives near-infrared light when the irradiation object is irradiated with near-infrared light using the light source unit 10. The wavelength of near-infrared light emitted from the irradiation device was 800 to 900 nm (peak was 850 nm).

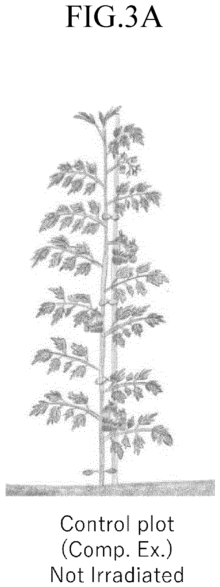

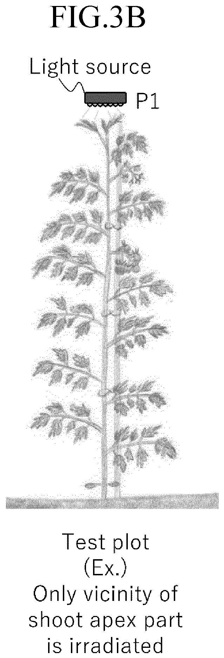

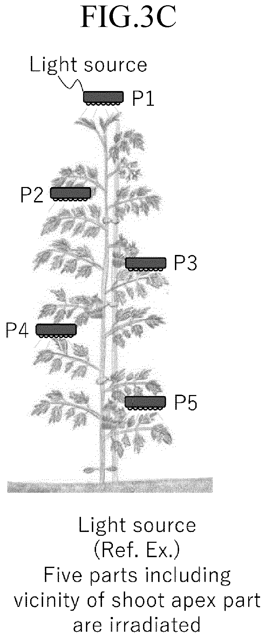

Healthy cherry tomato plants were planted using vertical shoot positioning in the soil of a greenhouse where sunlight was allowed to enter (August 4, 2021, Japan), three plots (a control plot, a test plot of the working example, a reference plot, and the number of plants in each plot n = 10) were irradiated with near-infrared light. Specifically, cherry tomato plants in the state before budding and flowering were planted and irradiated with near-infrared light from the time of planting. Conditions for near-infrared light irradiation are shown in Table 1 below. As shown in Table 1 below, the irradiance was 300 W/m$^2$ and the irradiation time per area (70 mm × 70 mm) was 1 second, which were conditions that satisfied the Formulae 1, 2, and 3 shown in FIG. 7. Irradiation was performed once every two weeks (seven times in total), where the first irradiation was performed on the day of planting. A position (P) of near-infrared light irradiation for each plot is shown in the schematic diagrams of FIGs. 3A to 3C. In the test plot of the working example, irradiation was performed on only the vicinity of a shoot apex part (growing point). In the reference plot, irradiation was performed on the vicinity of a shoot apex part as well as on leaves just above a flower truss (compound leaves just above a fruit). That is, when a flower truss appeared at the first time after planting (i.e., the first flower truss), two parts (the shoot apex part and leaves just above the first flower truss) were irradiated. When the second flower truss appeared, three parts (the shoot apex part and leaves just above the first and second flower truss) were irradiated. The number of irradiation parts was increased in this manner as the plant grew. Because the flower trusses of cherry tomato plants usually appear every three leaves, the entire plant in the reference plot was irradiated evenly using this method. A compound leaf means that, for example, many small leaves are grouped together to look like one leaf, like the leaves of a tomato plant.

[Table 1]

| Test Plot | Control Plot (Comp. Ex.) | Test Plot (Work. Ex.) | Reference Plot (Ref. Ex.) |
|---|---|---|---|
| | FIG. 3A | FIG. 3B | FIG. 3C |
| Irradiation Time | - | 1 s / 1 part | 1 s / 1 part |
| Irradiance | - | 300 W/m$^2$ | 300 W/m$^2$ |
| Irradiation Position | • Not irradiated | • Only vicinity of shoot apex part (P1) | • Only vicinity of shoot apex part (P1)<br>• Leaves just above flower truss (P2 - P5) |

Then, on October 28, 2021, 15 days after the final seventh irradiation, for each test plot, the compound leaves on the lowest branch of each plant (the branch closest to the roots) were grouped together to prepare one sample, and the status of leaf spots was evaluated through visual observation based on the following evaluation criteria (10 samples for each test plot). Then, the disease severity was calculated using the following formula from the evaluation index obtained, and a control value (a preventive value) was calculated using the following formula from the calculated disease severity (n = 10). Note that the control value is an index indicating the control effect (the preventive effect) of a pest control material (a pest preventive material) such as a pesticide. When a control value is 10 or more, usually, the pest control material has a control effect, and when a control value is 50 or more, a strong control effect equivalent to that of chemical pesticides can be obtained.

(Evaluation Criteria for Disease Status)

Susceptibility index 0 = No lesions are found on the surface of the compound leaves,

Susceptibility index 1: The percentage of lesion area on the entire surface of compound leaves is less than 5%,

Susceptibility index 2: The percentage of lesion area on the entire surface of compound leaves is 5% or more and less than 25%,

Susceptibility index 3: The percentage of lesion area on the entire surface of compound leaves is 25% or more and less than 50%, and Susceptibility index 4: The percentage of lesion area on the entire surface of compound leaves is 50% or more.

Disease severity = [Σ(number of samples by disease status × susceptibility index)/(number of samples × 4)] × 100      (Formula for Calculating Disease Severity)

Control value = 100 - [(disease severity in test plot or reference plot/disease severity in control plot) × 100]      (Formula for Calculating Control Value)

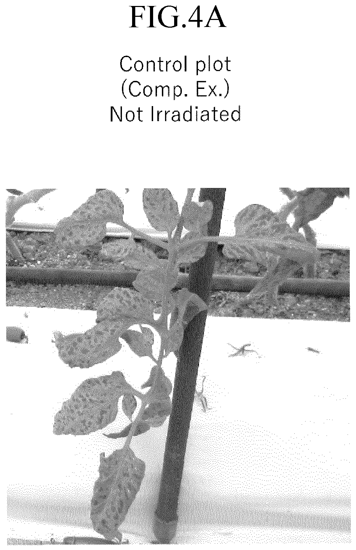

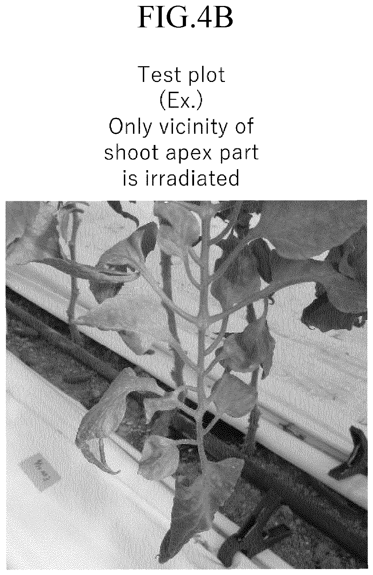

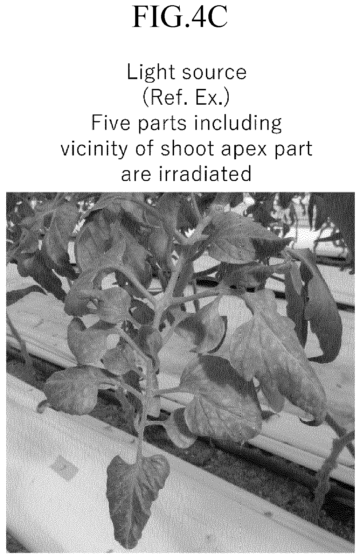

These results are shown in FIGs. 4A to 4C and Table 2. FIG. 4A is a photograph of the leaves of the lowest branch of the cherry tomato plant in the control plot, FIG. 4B is a photograph of the leaves of the lowest branch of the cherry tomato plant in the test plot of the working example, and FIG. 4C is a photograph of the leaves of the lowest branch of the cherry tomato plant in the reference plot. As shown in FIGs. 4A to 4C and Table 2, in the control plot (the comparative example) where near-infrared light irradiation was not performed, lesions were confirmed on many of the leaves on the lowest branch, which were susceptible to disease. Also, in the reference plot (Reference Example) where each individual cherry tomato plant was irradiated with near-infrared light over the total length of the cherry tomato plant, the development of lesions was prevented on the leaves of the lowest branch, which was susceptible to disease, and the disease severity was lower than that of the control plot. In contrast, in the test plot (the working example), although near-infrared light irradiation was limited to only the vicinity of the shoot apex part P1, the development of lesions was prevented, unlike in the control plot. Further, in the test plot (the working example), the disease severity and the control value, which indicate the degree of disease control, were superior to those in the reference plot (the reference example) where the entirety of the individual plants was irradiated.

[Table 2]

| Test Plot | Control Plot (Comp. Ex.) | Test Plot (Work. Ex.) | Reference Plot (Ref. Ex.) |
|---|---|---|---|
| Disease Severity | 76.3 | 32.5 | 35.0 |
| Control Value | - | 57.4 | 54.1 |

In general, lesions on plants are likely to develop in a lower part, and in particular on the first leaves that grow near the roots (leaves on the lowest branch). Thus, as shown in the conditions of the reference plot, when disease control is performed, the entire plant including the leaves of the lowest branch is irradiated with near-infrared light. In contrast, in the present invention, even though only the vicinity of the shoot apex part, where the risk of lesion development is thought to be low, was irradiated with near-infrared light, favorable results as described above were obtained. These irradiation conditions were first found by the inventors of the present invention.

Also, in the control plot, the test plot (the working example), and the reference plot, plants were all grown at the same time in the same greenhouse with sunlight, but as described above, the test plot artificially irradiated with near-infrared light exhibits favorable results. Although sunlight contains near-infrared light, this difference in results confirmed that the effect in the test plot was not obtained through non-artificial irradiation with sunlight, but by selecting a shoot apex part and artificially irradiating the shoot apex part with near-infrared light.

[Example 2]

Grapevines were irradiated with near-infrared light, and the expression of disease resistance-related genes and disease control effects were checked. Note that the same handheld irradiation device as in Example 1 above was used to perform near-infrared light irradiation, and the irradiation conditions for irradiation object parts of grapevines were also the same as in Example 1.

(1) Expression of Disease Resistance-Related Genes

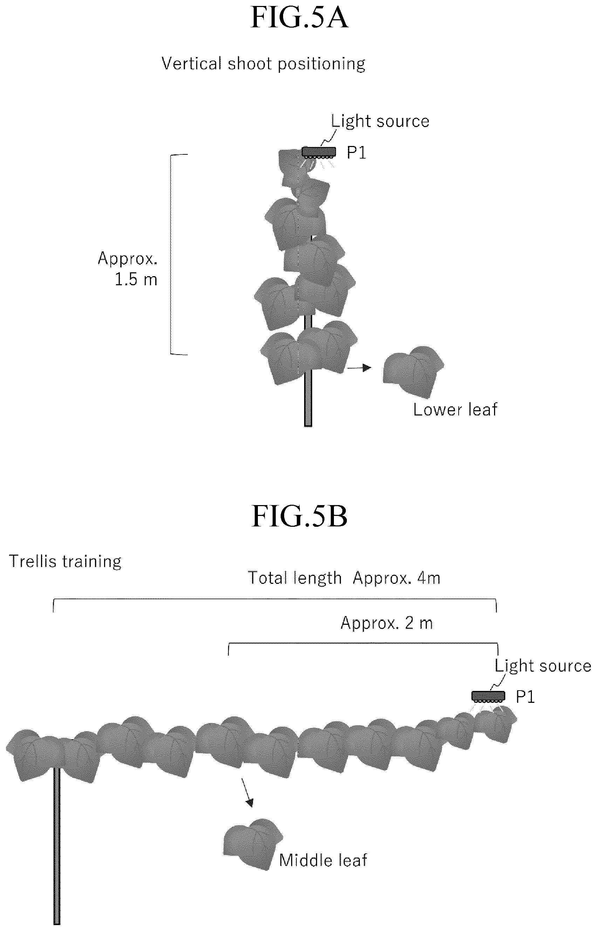

In a field, a white grape variety (Chardonnay) was grown using trellis training shown in FIG. 1B above, and a black grape variety (Eight Gold) was grown using vertical shoot positioning (Japan, July). For each grape variety, a control plot (not irradiated, Comparative Example, one plant) and a test plot (irradiated, the working example, one plant) were prepared. Then, the vicinity of a shoot apex part (growing point) P1 of the main branch of the grapevine in the test plot was irradiated with near-infrared light (irradiance was 300 W/m$^2$, irradiation time was 1 second, once), whereas no part of the grapevine in the control plot was irradiated with near-infrared light. Thereafter, one hour after near-infrared light irradiation, three leaves were collected from predetermined positions on the grapevine in the test plot and the grapevine in the control plot. FIGs. 5A and 5B show an overview of the positions of the leaves collected from the grapevines. As shown in FIG. 5A, when the grapevine was grown using the vertical shoot positioning, healthy leaves (lower leaves) located approximately 1.5 m downward from the shoot apex part, i.e., in the vicinity of the lowest leaf, were collected. As shown in FIG. 5B, when the grapevine was grown using the trellis training, healthy middle leaves were collected from a central part of the main branch, i.e., a position located approximately 2 m from the tip (shoot apex part) of the main branch.

The collected leaves were frozen on dry ice, RNA was extracted, and the expression of the following disease resistance-related genes were analyzed through real-time PCR. Then, a relative value ($E_1/E_0$) of a gene expression level ($E_1$) in the irradiated test plot to a gene expression level ($E_0$) in a non-irradiated control plot was calculated, and an increase in gene expression due to near-infrared light irradiation was evaluated.

(Disease Resistance-Related Genes)

- PAL (phenylalanine ammonia-lyase) gene: A gene for a key enzyme in a biosynthetic pathway of a phenylpropanoid-based compound such as lignin
- PR5 (Pathogenesis-related protein) gene: A gene for an antibacterial protein that is produced in plants when they are infected with a pathogen

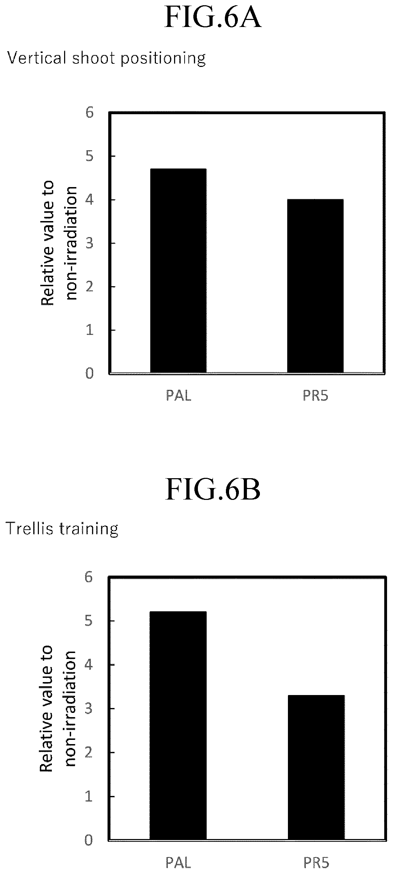

These results are shown in FIGs. 6A and 6B. FIGs. 6A and 6B are graphs showing the degree of an increase in gene expression due to near-infrared light irradiation, the degree of an increase being indicated by the relative value ($E_1/E_0$) of the gene expression level ($E_1$) in the irradiated test plot to the gene expression level ($E_0$) in a non-irradiated control plot. FIG. 6A shows the result of vertical shoot positioning, and FIG. 6B shows the result of trellis training.

First, as shown in FIGs. 6A and 6B, irradiation of only the vicinity of a shoot apex part with near-infrared light revealed that the gene expression level of any gene was significantly increased in the lower leaves, which are located away from the vicinity of the shoot apex part and are generally more susceptible to disease. The inventors of the present invention found for the first time that, in order to prevent disease in lower leaves, which are more susceptible to disease, irradiation of the vicinity of the shoot apex part located away from the lower leaves, instead of the lower leaves, with near-infrared light can result in an increase in expression of various genes involved in the prevention of disease development. Also, actually, it has already been confirmed in Example 1 above that irradiation of the vicinity of the shoot apex part with near-infrared light can prevent the development of disease in lower leaves on the opposite side.

(2) Disease Control Effect

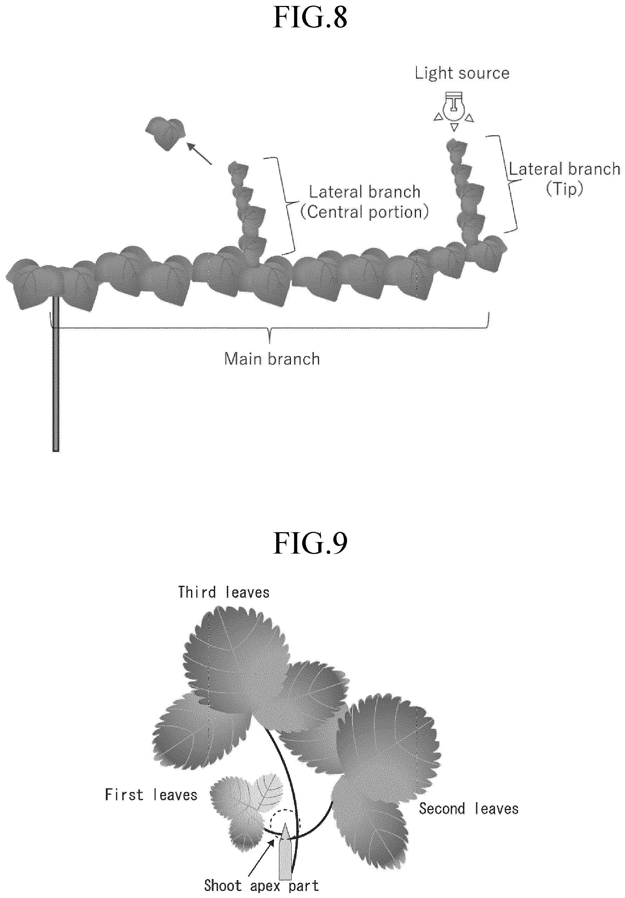

A white grape variety of wine grape (Chardonnay) was grown in a field using the trellis training shown in FIG. 1B above (July, Japan), and a control plot (not irradiated, Comparative Example, six plants) and a test plot (irradiated, the working example, six plants) were prepared. Then, as shown in FIG. 8, regarding the grapevines in the test plot, the vicinity of the shoot apex part (growing point) of a lateral branch (axillary bud) produced from the tip of the main branch was irradiated with near-infrared light. Irradiation was performed using the same irradiation device as in (1) above, and the irradiation conditions were as follows: once every two weeks, the irradiance was 300 W/m$^2$, the irradiation time was 1 second, and the wavelength was in a range from 800 to 900 nm (peak: 850 nm). On the other hand, near-infrared light irradiation was not performed on any parts of the grapevines in the control plot.

Thereafter, irradiation was performed under the above conditions for 2 months since the start of near-infrared light irradiation, and then, the status of downy mildew was evaluated through visual observation for each of the grapevines in the test plot and the grapevines in the control plot. Specifically, as shown in FIG. 8, all the leaves of the lateral branches produced from a central portion (approximately 2 m from the tip of the main branch) of the main branch that had grown to about 4 m were grouped together to prepare one sample, and the status of downy mildew was evaluated through visual observation of the leaf surfaces, based on the following evaluation criteria (6 samples for each test plot). Then, the disease severity was calculated using the following formula from the evaluation index obtained, and a control value was calculated using the following formula from the calculated disease severity (n = 6). Note that the control value is an index indicating the control effect of a pest control material such as a pesticide. When a control value is 10 or more, usually a control effect can be obtained, and when a control value is 50 or more, a strong control effect equivalent to that of chemical pesticides can be obtained.

(Evaluation Criteria for Disease Status)

Susceptibility index 0 = No lesions were observed on the surface of any of the leaves.
Susceptibility index 1: Leaves with scattered lesions on surfaces were observed, but leaves with lesions covering half or more of the area were not observed,
Susceptibility index 2: One or two leaves with lesions covering half or more of the area were observed,
Susceptibility index 3: Three or more leaves with lesions covering half or more of the area were observed, and
Susceptibility index 4: All of the leaves had lesions covering half or more of the area.

Disease severity = [Σ(number of samples by disease status × susceptibility index) / (number of samples × 4)] × 100    (Formula for Calculating Disease Severity)

Control value = 100 - [(disease severity in test plot or reference --> plot/disease severity in control plot) × 100]    (Formula for Calculating Control Value)

These results are shown in Table 3. As shown in Table 3, in the control plot (Comparative Example) where near-infrared light irradiation was not performed, a high disease severity was confirmed. In contrast, in the test plot (the working example), although near-infrared light irradiation was limited to only the vicinity of the shoot apex part of the lateral branch at the tip of the main branch, the disease severity in the leaves of the lateral branch at the central portion located away from the tip of the main branch was suppressed, exhibiting a high control value. Note that although the disease severity and the control value for the leaves of the lateral branches in the central portion of the main branch were calculated as described above in this example, a sufficient disease control effect on the leaves of other lateral branches was also confirmed through visual observation.

[Table 3]

| Test Plot | Control Plot (Comp. Ex.) | Test Plot (Work. Ex.) |
|---|---|---|
| Disease Severity | 77.83 | 38.9 |
| Control Value | - | 50.0 |

In both tests (1) and (2), plants were grown outdoors under sunlight, but as described above, the test plot artificially irradiated with near-infrared light exhibited favorable results. Thus, similarly to Example 1 above, it was confirmed that the effect in the test plot was not obtained through non-artificial irradiation with sunlight, but by selecting a shoot apex part and artificially irradiating the shoot apex part with near-infrared light.

[Example 3]

Strawberry plants were irradiated with near-infrared light, and the expression of disease resistance-related genes and disease control effects were checked.

(1) Expression of Disease Resistance-Related Genes

Strawberry (variety name: Nyoho) seedlings were irradiated with near-infrared light, and the expression of disease resistance-related genes were checked. Specifically, in a greenhouse where sunlight was allowed to enter, as shown in FIG. 9, regarding strawberry seedlings (n = 3) that had developed up to the fifth leaf, the vicinity of a shoot apex part was irradiated with near-infrared light once at 850 nm and an irradiance of 300 $W/m^2$ for irradiation time of 1 second (June, Japan). FIG. 9 is a schematic diagram showing the vicinity of the shoot apex part of a strawberry seedling. Thirty minutes after irradiation, the third leaves, which are representative leaves for measuring growth and have not yet begun to senesce, were collected from the seedlings, and the PAL gene expression was analyzed in the same manner as in Example 2(1) above. The collected third leaves were leaves that had not yet begun to senesce but had already reached the stage of full growth in the petiole and leaf area, and were the third leaves counted in order of newness, where the most recent leaf that unfolded in the vicinity of the shoot apex part is the first leaf (new first leaf). On the other hand, the third leaves were also collected from the strawberry (variety name: Nyoho) seedlings (n = 3) that were not irradiated with near-infrared light, and the PAL gene expression was analyzed in the same manner as in Example 2(1) above. Then, the relative value ($E_1/E_0$) of the gene expression level ($E_1$) in the irradiated seedlings to the gene expression level ($E_0$) in the non-irradiated seedlings was calculated, and an increase in gene expression due to near-infrared light irradiation was evaluated.
As a result, the relative value ($E_1/E_0$) of the gene expression level ($E_1$) in the irradiated seedlings was 3.5. It was confirmed that the PAL gene expression was significantly increased by only irradiating the vicinity of the shoot apex part with near-infrared light, even though the third leaves were not irradiated with near-infrared light.

(2) Disease Control Effect

Strawberry (variety name: Nyoho) seedlings were divided into two test plots and grown in a greenhouse using a Kagawa strawberry peat bag hydroponic cultivation system (starting on October 1, 2021). During the cultivation period, in one of the irradiation plots (100 seedlings), the vicinity of the shoot apex part of each seedling was irradiated with near-infrared light once every two weeks. Conditions for near-infrared light irradiation were as follows: the wavelength was 850 nm, the irradiance was 300 $W/m^2$, the irradiation time was 1 second, and the number of instances of irradiation was one. In the other non-irradiated plot (100 seedlings), the seedlings were cultivated in the same manner, except that near-infrared light irradiation was not performed. During the cultivation period, plants that had died due to anthracnose were removed. Then, irradiation was performed under the above conditions for 253 days after the start of cultivation (until June 10, 2022), the final fruits were harvested, and cultivation was ended. Thereafter, at the end of cultivation, the number of plants missing due to disease was counted for each test plot, and the percentage (%) of missing plants per 100 plants was calculated. These results are shown in Table 4.

[Table 4]

| Test Plot | Missing Plant Rate |
|---|---|
| Irradiated (Ex.) | 9.1% * |
| Not Irradiated (Comp. Ex.) | 14.7% |
| *: Testing indicates that there is a significant difference at a level of 5% compared to no irradiation | |

As shown in Table 4, the missing plant rate was significantly reduced by irradiating the shoot apex parts of strawberry seedlings with near-infrared light.

In both tests (1) and (2), plants were grown indoors where sunlight was allowed to enter, but as described above, the test plot (the working example) artificially irradiated with near-infrared light exhibited favorable results. Thus, similarly to Example 1 above, it was confirmed that the effect in the test plot (the working example) was not obtained through non-artificial irradiation with sunlight, but by selecting a shoot apex part and artificially irradiating the shoot apex part with near-infrared light.

[Example 4]

Shishito pepper plants were irradiated with near-infrared light, and the expression of disease resistance-related genes was checked.

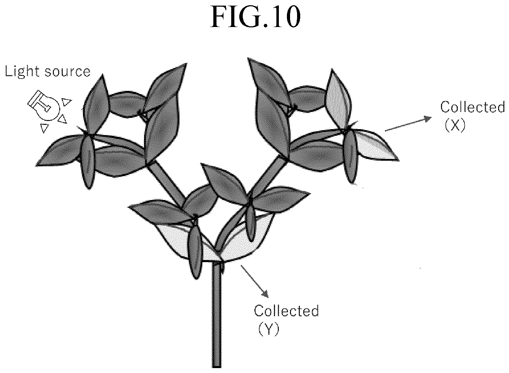

Shishito pepper (variety name: Aoi Shishito) seedlings (n = 3) were irradiated with near-infrared light, and the expression of disease resistance-related genes were checked. Specifically, as shown in FIG. 10, the vicinity of the shoot apex part (growing point) of one of the two branches branching out from the main stem of each seedling grown in a greenhouse where sunlight was allowed to enter (November, Japan) was irradiated with near-infrared light once at 850 nm and an irradiance of 300 W/m$^2$ for irradiation time of 1 second. FIG. 10 is a schematic diagram showing the vicinity of the shoot apex part of a shishito pepper seedling. Sixty minutes after irradiation, one fully expanded leaf (X) in the vicinity of the shoot apex part of the other branch (unirradiated), and one fully expanded leaf (the lowest leaf, Y) just below the branch on the main stem were collected, and the PAL gene expression was analyzed in the same manner as in Example 2(1). On the other hand, the PAL gene expression in seedlings of the same species whose parts were not irradiated with near-infrared light as described above was analyzed in a similar manner. Then, the relative value ($E_1/E_0$) of the gene expression level ($E_1$) in the irradiated seedlings to the gene expression level ($E_0$) in the non-irradiated seedlings was calculated, and an increase in gene expression due to near-infrared light irradiation was evaluated.

As a result, the relative value ($E_1/E_0$) of the gene expression level ($E_1$) in the leaf (X) in the vicinity of the shoot apex part of the unirradiated branch of the irradiated seedling was 17.0, and the relative value ($E_1/E_0$) of the gene expression level ($E_1$) in the lowest leaf (Y) of the main stem of the irradiated seedling was 4.1. By only irradiating the shoot apex part of one branch with near-infrared light, the expression of disease resistance-related genes was increased widely, extending to the other non-irradiated branch and even to the lowest leaves of the main stem.

In this test, plants were grown in a greenhouse where sunlight was allowed to enter, but as described above, the seedlings irradiated with near-infrared light exhibited more favorable results, as compared to those of non-irradiated seedlings. Thus, similarly to Example 1 above, it was confirmed that the effect in the test plot was not obtained through non-artificial irradiation with sunlight, but by selecting a shoot apex part and artificially irradiating the shoot apex part with near-infrared light.

Although the present invention has been described as described above with reference to the embodiments and examples, the present invention is not limited to the embodiments and examples described above. Various modifications that can be understood by a person skilled in the art can be made in the configurations and details of the present invention without departing from the scope of the present invention.

The present application claims priority based on Japanese Patent Application No. 2022-45376 filed on March 22, 2022, the entire contents of which are hereby incorporated herein by reference.

Industrial Applicability

According to the present invention, it is possible to effectively control a disease in a plant during cultivation by irradiating the shoot apex part of the plant even when, for example, the entire plant is not irradiated with near-infrared light. Thus, according to the present invention, for example, it is possible to reduce the size of an irradiation device used for near-infrared light irradiation and to further reduce consumption of light energy, thus realizing cost reduction and labor saving in irradiation.

**Claims**

1. A disease control method comprising
   irradiating a shoot apex part of a plant with near-infrared light.

2. The disease control method according to claim 1,
   wherein an irradiation area of the near-infrared light is a vicinity of the shoot apex part including the shoot apex part.

3. The disease control method according to claim 2,
   wherein the vicinity of the shoot apex part is in an area based on a tip of a stem, the area having a length that is 1/3 or less of a total length from the tip to a position of a branch at another end of the stem in a stem growth direction.

4. The disease control method according to any one of claims 1 to 3,

   wherein conditions under which the shoot apex part or the vicinity of the shoot apex part is irradiated satisfy Formula 1, Formula 2, and Formula 3,

   $$\text{Formula 1: } 644893\mathrm{X}^{-1.873} \geq \mathrm{Y} \geq 5901.9\mathrm{X}^{-1.856}$$

   $$\text{Formula 2: } \mathrm{X} \geq 1$$

   $$\text{Formula 3: } \mathrm{Y} \geq 0.01$$

   where in each of the formulae, X is irradiance (W/m$^2$), and Y is irradiation time (sec).

5. The disease control method according to any one of claims 1 to 4,
   wherein a wavelength of the near-infrared light is in a range from 800 to 1000 nm.

6. The disease control method according to any one of claims 1 to 5,
   wherein a frequency of irradiation of the shoot apex part or the vicinity of the shoot apex part is from once a day to once a month.

7. The disease control method according to any one of claims 1 to 6,
   wherein a plant disease is a disease caused by a fungus.

8. The disease control method according to claim 7,
   wherein the fungus is at least one fungus selected from the group consisting of Ascomycota, Basidiomycota, flagellated fungi, Oomycota, and fungi imperfecti.

9. The disease control method according to any one of claims 1 to 8,
   wherein the plant disease is at least one disease selected from the group consisting of powdery mildew, gray mold, leaf mold, anthracnose, and downy mildew.

10. The disease control method according to any one of claims 1 to 9,
    wherein the plant is at least one plant selected from the group consisting of a strawberry plant, a tomato plant, a cherry tomato plant, a shishito pepper plant, a green bell pepper plant, a bell pepper plant, an eggplant plant, a cucumber plant, a pumpkin plant, a melon plant, a watermelon plant, an okra plant, a cabbage plant, a broccoli plant, a cauliflower plant, a napa cabbage plant, a komatsuna plant, a nabana plant, a leek plant, an onion plant, an asparagus plant, a grape plant, a citrus fruit plant, a peach plant, a pear plant, a persimmon plant, a cherry plant, a chrysanthemum plant, a rose plant, a carnation plant, and a lisianthus plant.

# FIG.1A

# FIG.1B

Vertical shoot positioning     Trellis training

# FIG.2

# FIG.3A

Control plot
(Comp. Ex.)
Not Irradiated

# FIG.3B

Light source

P1

Test plot
(Ex.)
Only vicinity of
shoot apex part
is irradiated

# FIG.3C

Light source

P1

P2

P3

P4

P5

Light source
(Ref. Ex.)
Five parts including
vicinity of shoot apex part
are irradiated

# FIG.4A

Control plot
(Comp. Ex.)
Not Irradiated

# FIG.4B

Test plot
(Ex.)
Only vicinity of
shoot apex part
is irradiated

# FIG.4C

Light source
(Ref. Ex.)
Five parts including
vicinity of shoot apex part
are irradiated

# FIG.5A

Vertical shoot positioning

# FIG.5B

# FIG.6A

Vertical shoot positioning

# FIG.6B

Trellis training

# FIG.7

# FIG.8

Light source

Lateral branch
(Tip)

Lateral branch
(Central portion)

Main branch

# FIG.9

Third leaves

First leaves

Second leaves

Shoot apex part

# FIG.10

Light source

Collected
(X)

Collected
(Y)

## INTERNATIONAL SEARCH REPORT

| International application No. |
|---|
| **PCT/JP2023/011240** |

**A.    CLASSIFICATION OF SUBJECT MATTER**

*A01G 7/00*(2006.01)i
FI:    A01G7/00 604Z

According to International Patent Classification (IPC) or to both national classification and IPC

**B.    FIELDS SEARCHED**

Minimum documentation searched (classification system followed by classification symbols)

A01G7/00-7/06; A01G13/00-13/10; A01N3/00-3/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| X | WO 2021/049640 A1 (SHIKOKU RESEARCH INSTITUTE INCORPORATED) 18 March 2021 (2021-03-18) paragraphs [0031]-[0156], fig. 1-11 | 1, 4-10 |
| A | paragraphs [0031]-[0156], fig. 1-11 | 2-3 |
| A | JP 2013-230122 A (SHIMANE UNIV) 14 November 2013 (2013-11-14) entire text, all drawings | 1-10 |
| A | JP 2004-275153 A (NEMOTO, Hisashi) 07 October 2004 (2004-10-07) entire text, all drawings | 1–10 |

☐ Further documents are listed in the continuation of Box C.          ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **08 May 2023** | **23 May 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/011240**

| Patent document cited in search report | | | Publication date (day/month/year) | Patent family member(s) | | | Publication date (day/month/year) |
|---|---|---|---|---|---|---|---|
| WO | 2021/049640 | A1 | 18 March 2021 | US 2022/0394933 A1 paragraphs [0071]-[0306], fig. 1-11 EP 4029373 A1 | | | |
| JP | 2013-230122 | A | 14 November 2013 | (Family: none) | | | |
| JP | 2004-275153 | A | 07 October 2004 | (Family: none) | | | |

Form PCT/ISA/210 (patent family annex) (January 2015)

**EP 4 497 322 A1**

**REFERENCES CITED IN THE DESCRIPTION**

**Patent documents cited in the description**

- JP 6061124 B
- WO 2021049640 A
- JP 2022045376 A